(19) Europäisches Patentamt
European Patent Office
Office européen des brevets

(11) **EP 2 829 215 A1**

(12) **EUROPEAN PATENT APPLICATION**
published in accordance with Art. 153(4) EPC

(43) Date of publication:
**28.01.2015 Bulletin 2015/05**

(51) Int Cl.:
*A47L 15/42* (2006.01)  *A47L 15/46* (2006.01)
*C02F 1/46* (2006.01)  *D06F 35/00* (2006.01)
*D06F 39/00* (2006.01)  *D06F 39/04* (2006.01)
*D06F 39/08* (2006.01)

(21) Application number: **13764891.1**

(22) Date of filing: **15.03.2013**

(86) International application number:
**PCT/JP2013/057532**

(87) International publication number:
**WO 2013/141177 (26.09.2013 Gazette 2013/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.03.2012  JP 2012062386**

(71) Applicant: **Sharp Kabushiki Kaisha**
**Osaka-shi, Osaka 545-8522 (JP)**

(72) Inventors:
• **KAWAZU, Takeshi**
  **Osaka 545-8522 (JP)**
• **YANO, Hirotsugu**
  **Osaka 545-8522 (JP)**
• **YOSHIDA, Akira**
  **Osaka 545-8522 (JP)**

(74) Representative: **Treeby, Philip David William et al**
**RGC Jenkins & Co.**
**26 Caxton Street**
**London SW1H 0RJ (GB)**

(54) **WASHING DEVICE AND WASHING METHOD**

(57)    A washing device includes a container (10) in which aqueous solution. is contained, an adsorption electrode (11) which is placed in the container (10) and on which adsorption and desorption of ions in the aqueous solution can be brought about, a counter electrode (12) which is placed in the container (10) so as to face the adsorption electrode (11), a direct-current power source (20) for applying a voltage between the adsorption electrode (11) and the counter electrode (12), and a switching circuit (30) for switching polarity of the voltage applied between the adsorption electrode (11) and the counter electrode (12). A control device (40) controls the direct-current power source (20) and the switching circuit (30) and has a first mode in which first functional water is produced by release of cations into the aqueous solution from the adsorption electrode (11) or adsorption of anions in the aqueous solution onto the adsorption electrode (11) with the adsorption electrode (11) set as anode and with the counter electrode (12) set as cathode. Thus the washing device capable of efficiently producing functional water having undergone hardness control and pH control is provided with use of a simple configuration.

Fig.1

**Description**

TECHNICAL FIELD

The present invention relates to a washing device and a washing method.

BACKGROUND ART

There has been a first conventional washing device in which pH-controlled sterilized water is produced in an electrolytic tank with no diaphragm by mixture of aqueous sodium chloride solution and aqueous hydrochloric acid solution (see JP H05-237478 A (PTL 1), for instance).

There has been a second conventional washing device in which hardness components are controlled by application of a voltage between an ion adsorption electrode and a counter electrode (see JP 2011-132678 A (PTL 2), for instance).

Functional water such as alkaline water, acidic water, hard water, and soft water produced by the first and second conventional washing devices are effective for washing clothes, tableware, and the like.

The first and second conventional washing devices, however, have a problem in that efficiency is impaired because it is necessary to separately produce the alkaline water, the acidic water, the hard water, and the soft water and because it takes much time to sequentially produce the hard water and the soft water.

In case where electrolyzed water such as alkaline water and acidic water and hard water or soft water are simultaneously produced or where hard water and soft water are simultaneously produced, for avoidance of such a problem, requirement of preparation of a plurality of producing units may cause increase in size of the device and in number of components and resultant increase in costs.

CITATION LIST

Patent Literature

PTL1: JP H05-237478 A
PTL2: JP 2011-132678 A

SUMMARY OF INVENTION

Technical Problem

An object of the invention is to provide a washing device and a washing method by which functional water having undergone hardness control and/or pH control can efficiently be produced with use of a simple configuration.

Solution to Problem

In order to solve the problem, a washing device of the invention comprises:

a container in which aqueous solution is contained,
an adsorption electrode which is placed in the container and on which adsorption and desorption of ions in the aqueous solution can be brought about,
a counter electrode which is placed in the container so as to face the adsorption electrode,
voltage application means which applies a voltage between the adsorption electrode and the counter electrode ,
polarity switching means which switches polarity of the voltage applied between the adsorption electrode and the counter electrode, and
control means which controls the voltage application means and the polarity switching means, wherein
the control means has a first mode in which first functional water is produced by release of cations into the aqueous solution from the adsorption electrode or by adsorption of anions in the aqueous solution onto the adsorption electrode with the adsorption electrode set as anode and with the counter electrode set as cathode through control over the voltage application means and the polarity switching means.

According to the above configuration, the voltage application means and the polarity switching means are controlled by the control means, so that alkaline water is produced as the first functional water by the release of the cations into the aqueous solution from the adsorption electrode or by the adsorption of the anions in the aqueous solution onto the adsorption electrode with the adsorption electrode set as the anode and with the counter electrode set as the cathode in the first mode. Then the voltage that causes electrolysis of water only on side of the counter electrode is applied between the adsorption electrode and the counter electrode, and thus pH is increased in the first mode by production of hydrogen gas and hydroxide ions through the electrolysis of water on a surface of the counter electrode serving as the cathode. As a result, the functional water having undergone hardness control and/or pH control can efficiently be produced with use of the simple configuration.

In the washing device according to an embodiment,
the control means has a second mode in which second functional water is produced by adsorption of the cations in the aqueous solution onto the adsorption electrode or by release of the anions into the aqueous solution from the adsorption electrode with the adsorption electrode set as the cathode and with the counter electrode set as the anode through control over the voltage application means and the polarity switching means.

In the embodiment, the voltage application means and the polarity switching means are controlled by the control means, so that the adsorption electrode is regenerated for subsequent production of acid water by the adsorption of the cations in the aqueous solution onto the adsorption electrode with the adsorption electrode set as the cathode and with the counter electrode set as the anode in the second mode. Then the voltage that causes electrolysis of water only on the side of the counter electrode is applied between the adsorption electrode and the counter electrode, and thus the pH is decreased in the second mode by production of oxygen gas and hydrogen ions through the electrolysis of water on the surface of the counter electrode serving as the cathode, so that the pH can be controlled.

In the washing device according to an embodiment,
the control means controls the voltage application means and the polarity switching means so as to alternately carry out the first mode and the second mode.

In the embodiment, the acid water and the alkaline water can efficiently be produced by alternate execution of the first mode and the second mode through control over the voltage application means and the polarity switching means by the control means.

In the washing device according to an embodiment,
the control means controls the voltage application means and the polarity switching means so as to carry out the first mode and so as to thereafter carry out the second mode in one washing operation.

In the embodiment, by the execution of the first mode and the subsequent execution of the second mode in one washing operation, the first functional water (alkaline water) and the second functional water (acid water) are produced in order of mention in a sequence of the one washing operation, and thus washing, bacteria elimination, and sterilization can effectively be carried out by initial elimination of protein stains on objects to be washed, for instance, by the first functional water (alkaline water) and by the subsequent bacteria elimination and sterilization by the second functional water (acid water). After the cations are released from the adsorption electrode in the first mode, the second mode in which the cations are adsorbed can efficiently be carried out.

In the washing device according to an embodiment,
the control means finishes one washing operation with the second mode.

In the embodiment, the cations can be made to remain adsorbed on the adsorption electrode by completion of one washing operation with final execution of the second mode in the sequence of the one washing operation, and thus the cations can efficiently be released in an operation of the first mode in the subsequent washing operation.

In the washing device according to an embodiment,
the adsorption electrode is brought into a state in which the cations are adsorbed on the adsorption electrode before the first mode is first carried out.

In the embodiment, the cations can efficiently be released in the first mode in first operation of the device, with the cations adsorbed on the adsorption electrode in shipping by execution of the second mode upon initial start-up or with the cations adsorbed on the adsorption electrode by addition of auxiliaries into the adsorption electrode upon the initial start-up.

In the washing device according to an embodiment,
the control means carries out a preliminary washing mode in which washing is carried out using preliminary washing water, before carrying out the first mode.

In the embodiment, the washing is carried out using the preliminary washing water before the first mode is carried out, thus large stains on objects to be washed can be removed without use of the functional water obtained by execution of the first mode, and the washing using the functional water can effectively be carried out against stains stuck on the objects to be washed.

In the washing device according to an embodiment,
the control means carries out the second mode while carrying out the preliminary washing mode.

In the embodiment, the second mode can be carried out to produce the alkaline water with use of time when the large stains are removed in the preliminary washing mode, and thus the washing using the alkaline water can be carried out as soon as the preliminary washing mode is finished.

In the washing device according to an embodiment,
the control means carries out the second mode when no washing operation is carried out.

In the embodiment, the control means carries out the second mode when the washing operation is not carried out, and thus the washing using the alkaline water can immediately be carried out.

The washing device according to an embodiment further comprises:
a tank for storing the first functional water produced in the first mode.

In the embodiment, the first functional water (alkaline water) produced in the first mode is temporarily stored in the tank, thus the first functional water (alkaline water) stored in the tank can be used on condition that volume of the first functional water (alkaline water) produced in the subsequent first mode does not satisfy a volume required for washing, and washing capacity can be improved. The second functional water (acid water) produced in the second mode may temporarily be stored in the tank. In this technique, the second functional water (acid water) stored in the tank can be used on condition that volume of the second functional water (acid water) produced in the subsequent second mode does not satisfy a volume required for bacteria elimination and sterilization, and thus capacity for the bacteria elimination and sterilization can be improved.

In the washing device according to an embodiment,
the control means
in the first mode, increases hardness by the release of the cations into the aqueous solution from the adsorption electrode and increases pH of the aqueous solution by electrolysis of the aqueous solution with the adsorption electrode set as the anode and with the counter electrode set as the cathode, and
in the second mode, decreases the hardness by the adsorption of the cations in the aqueous solution onto the adsorption electrode and decreases the pH of the aqueous solution by the electrolysis of the aqueous solution with the adsorption electrode set as the cathode and with the counter electrode set as the anode.

In the embodiment, the control means, in the first mode, increases the hardness by the release of the cations into the aqueous solution from the adsorption electrode and increases the pH of the aqueous solution by the electrolysis of the aqueous solution with the adsorption electrode set as the anode and with the counter electrode set as the cathode, and thus the alkaline hard water can be produced. The control means, in the second mode, decreases the hardness by the adsorption of the cations in the aqueous solution onto the adsorption electrode and decreases the pH of the aqueous solution by the electrolysis of the aqueous solution with the adsorption electrode set as the cathode and with the counter electrode set as the anode, and thus the acid soft water can be produced.

The washing device according to an embodiment further comprises:
adding means by which hardness components for further increasing the hardness of the first functional water are added as auxiliaries to the first functional water before or after the first functional water is produced in the first mode.

In the embodiment, the hardness components for further increasing the hardness of the first functional water are added as the auxiliaries by the adding means to the first functional water before the first functional water is produced (or after the first functional water is produced) in the first mode, so that hard water or alkaline hard water that has high hardness is obtained. In a region where tap water has low hardness, for instance, hard water or alkaline hard water that is produced cannot be provided with so high hardness, and the hardness can be increased by addition of the hardness components as the auxiliaries thereto.

The washing device according to an embodiment further comprises:

a washing tank for containing objects to be washed,
water supply means for supplying water from outside into the washing tank,
drain means for draining the water in the washing tank, and
functional water supply means for supplying at least the first functional water produced in the container, as washing water, to the objects to be washed in the washing tank.

In the embodiment, in the washing device such as a dishwasher, for instance, the water is supplied by the water supply means from the outside into the washing tank in which tableware that is to be washed is contained, washing is carried out with use of washing water in which the water and detergent are mixed, and the washing water in the washing tank is thereafter drained by the drain means. Then at least the first functional water produced in the container is added by the functional water supply means to the objects to be washed in the washing tank and to the washing water. Thus the washing device having a high washing effect can be provided. Total volume of the first functional water produced by the washing device may be used as the washing water, without addition to the washing water of the first functional water produced by the washing device.

The washing device according to an embodiment further comprises:

heating means for heating at least the first functional water produced in the container.

In the embodiment, washing effect of the first functional water (alkaline water) can be improved because at least the first functional water produced in the container is heated by the heating means.

The washing device according to an embodiment further comprises:

washing water collection means for collecting the washing water in the washing tank, and
circulation means for circulating the washing water through at least the functional water supply means and the washing water collection means.

In the embodiment, the washing water in the washing tank is collected by the washing water collection means and is then circulated by the circulation means through at least the functional water supply means and the washing water collection means, so that reuse as the first functional water (alkaline water) and sustainable exertion of the washing effect can be attained.

In the washing device according to an embodiment,
the functional water supply means is spray means for spraying at least the first functional water, produced in the container, as the washing water onto the objects to be washed in the washing tank.

In the embodiment, the functional water can reliably be hit on the objects to be washed in the washing tank and the washing effect can be increased by use as the functional water supply means of the spray means for spraying at least the first functional water, produced in the container, as the washing water onto the objects to be washed in the washing tank.

In the washing device according to an embodiment,
the container in which the adsorption electrode and the counter electrode are placed is placed in a water flow path through which the aqueous solution flows, and wherein
at least the first functional water is produced in the container through which the aqueous solution flows.

In the embodiment, at least the first functional water is produced, while the aqueous solution is made to flow, in the container placed in the water flow path through which the aqueous solution flows, and thus the functional water can continuously be supplied.

A washing method of the invention uses a washing device including a container in which aqueous solution is contained, an adsorption electrode which is placed in the container and on which adsorption and desorption of ions in the aqueous solution can be brought about, a counter electrode which is placed in the container so as to face the adsorption electrode, voltage application means which outputs a voltage to be applied between the adsorption electrode and the counter electrode, polarity switching means which switches polarity of the voltage applied between the adsorption electrode and the counter electrode, and control means which controls the voltage application means and the polarity switching means, the washing method comprising:

a first step in which first functional water is produced by release of cations into the aqueous solution from the adsorption electrode or by adsorption of anions in the aqueous solution onto the adsorption electrode with the adsorption electrode set as anode and with the counter electrode set as cathode, and
a second step in which second functional water is produced by adsorption of the cations in the aqueous solution by the adsorption electrode or by release of the anions into the aqueous solution from the adsorption electrode with the adsorption electrode set as the cathode and with the counter electrode set as the anode, wherein
the first step and the second step are alternately carried out by control over the voltage application means and the polarity switching means by the control means, and wherein
the control means controls the voltage application means and the polarity switching means so as to carry out the first step and so as to thereafter carry out the second step in one washing operation.

In above configuration, the control means controls the voltage application means and the polarity switching means so as to produce alkaline water as the first functional water by the release of the cations into the aqueous solution from the adsorption electrode or by the adsorption of the anions in the aqueous solution onto the adsorption electrode with the adsorption electrode set as the anode and with the counter electrode set as the cathode in the first step. In the second step, acid water is produced as the second functional water by the adsorption of the cations in the aqueous solution onto the adsorption electrode or by the release of the anions into the aqueous solution from the adsorption electrode with the adsorption electrode set as the cathode and with the counter electrode set as the anode. Then the voltage that causes electrolysis of water only on side of the counter electrode is applied between the adsorption electrode and the counter electrode, thus pH is increased in the first step by production of hydrogen gas and hydroxide ions through the electrolysis of water on a surface of the counter electrode serving as the cathode, whereas the pH is decreased in the second step by production of oxygen gas and hydrogen ions through the electrolysis of water on the surface of the counter electrode serving as the anode, and the pH can consequently be controlled. Soft water, hard water, the acid water, and the alkaline water can efficiently be produced by alternate execution of the first step and the second step. The first functional water (alkaline water) and the second functional water (acid water) are produced in order of mention in a sequence of the one washing operation, and thus washing, bacteria elimination, and sterilization can effectively be carried out because protein stains on objects to be washed, for instance, are initially eliminated by the first functional water (alkaline water) and because the bacteria elimination and the sterilization are subsequently carried out by the second functional water (acid water). After the cations are released from the adsorption electrode in the first mode, the second mode in which the cations are adsorbed can efficiently be carried out. As a result, the functional water having undergone hardness control and/or pH control can efficiently be produced with use of the simple configuration.

Advantageous Effects of Invention

As apparent from above, the invention provides the washing device and the washing method by which the functional water having undergone the hardness control and/or the pH control can efficiently be produced with use of the simple configuration.

BRIEF DESCRIPTION OF DRAWINGS

Fig. 1 is a schematic diagram showing a configuration of a washing device according to a first embodiment of the invention;
Fig. 2 is a schematic diagram for illustrating reactions in production of alkaline hard water in the washing device;
Fig. 3 is a schematic diagram for illustrating reactions in production of acid soft water in the washing device;
Fig. 4A is a flow chart illustrating a method for producing functional water using the washing device;
Fig. 4B is a flow chart illustrating another method for producing functional water using the washing device;
Fig. 5A is a schematic diagram showing a configuration of a dishwasher as an example of a washing device according to a second embodiment of the invention;
Fig. 5B is a flow chart illustrating another method for producing functional water in the washing device according to the second embodiment of the invention;
Fig. 5C is a flow chart illustrating another method for producing functional water in the washing device according to the second embodiment of the invention; and
Fig. 6 is a schematic diagram showing a configuration of a drum-type washing machine as an example of a washing device according to a third embodiment of the invention.

DESCRIPTION OF EMBODIMENTS

Hereinbelow, a washing device and a washing method in accordance with the invention will be described in detail with reference to embodiments shown in the drawings.

(First Embodiment)

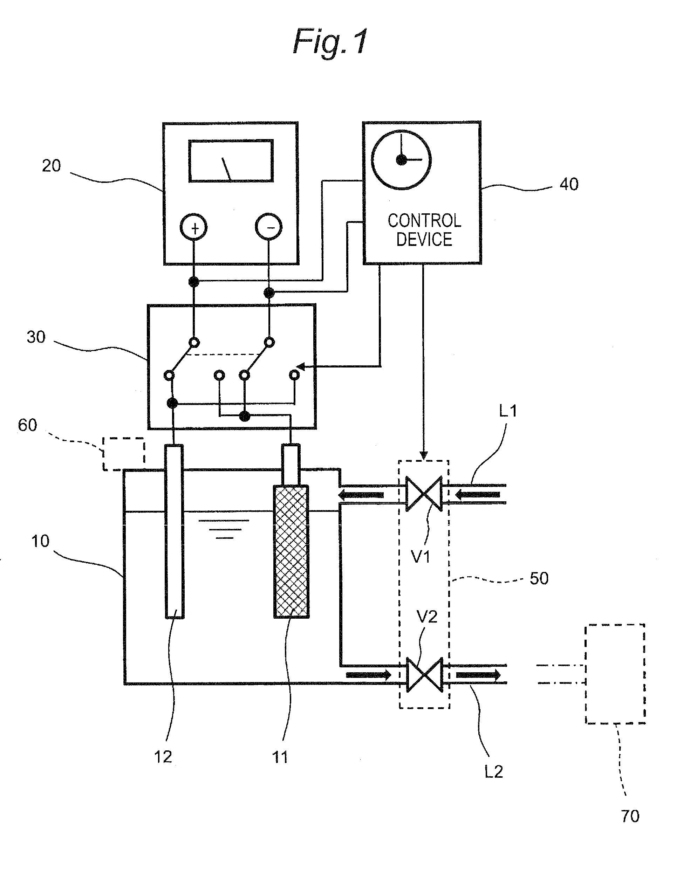

Fig. 1 shows a configuration of a functional water producing device as an example of a washing device according to a first embodiment of the invention.

As shown in Fig. 1, the functional water producing device of the embodiment includes a container 10 in which aqueous solution is contained, an adsorption electrode 11 which is placed in the container 10 and on which adsorption and desorption of ions in the aqueous solution can be brought about, a counter electrode 12 which is placed in the container 10 so as to face the adsorption electrode 11, a direct-current power source 20 as an example of voltage application means which applies a voltage between the adsorption electrode 11 and the counter electrode 12, a switching circuit 30 as an example of polarity switching means which switches polarity of the voltage applied between the adsorption electrode 11 and the counter electrode 12, and a control device 40 as an example of control means which controls the direct-current power source 20 and the switching circuit 30.

The adsorption electrode 11 is made of porous carbon material (such as activated carbon) and the counter electrode 12, which has only to be an insoluble electrode member and which may be carbon or the like, may be an electrode made of Ti and having a surface coated with Pt, for instance, because metal (at least one of Pt, Au, Pd, and Rh (or alloy thereof), for instance) that is prone to cause electrolysis of water is preferably used. Though the adsorption electrode 11 and the counter electrode 12 have shapes like flat plates in the embodiment, the shapes may appropriately be determined according to shapes of materials of the electrodes, shape of the container, and/or the like.

The functional water producing device includes a water exchanging unit 50 which has a first pipe L1 having one end connected to upper side of the container 10, a second pipe L2 having one end connected to lower side of the container 10, and on-off valves V1 and V2 placed in the first pipe L1 and the second pipe L2, respectively.

The control device 40 is made of microcomputers, input-output circuits, and the like, controls the switching circuit 30 on basis of output voltage of the direct-current power source 20, and controls the water exchanging unit 50.

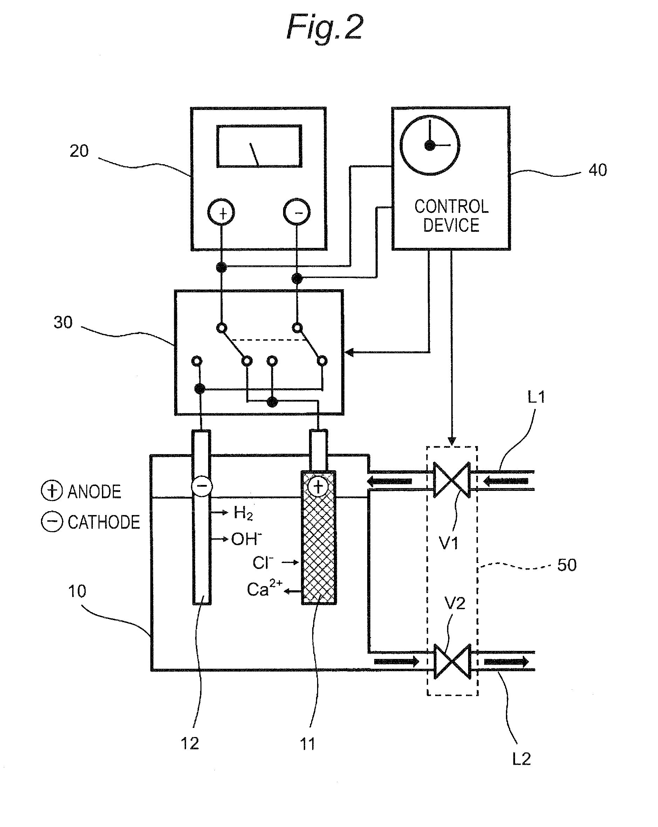

By controlling the water exchanging unit 50, as shown in Fig. 2, the control device 40 opens the on-off valve V1, closes the on-off valve V2, and thereby supplies the aqueous solution into the container 10. Herein, the aqueous solution refers to water, such as tap water, containing electrolytes and neutral soft water is used as the aqueous solution in the embodiment.

In accordance with a standard of the World Health Organization (WHO), hardness of soft water is 0 through less than 60 [mg/L], hardness of moderately soft water (medium hard water) is 60 through less than 120 [mg/L], and hardness of hard water is 120 [mg/L] or greater. The hardness is calculated by use of following expression.

$$\text{hardness } [mg/L] = (\text{amount of calcium } [mg/L] \times 2.5) + (\text{amount of magnesium } [mg/L] \times 4.1)$$

The adsorption electrode 11 is initially in a state in which cations are adsorbed thereon. The cations can efficiently be released in a first mode upon first activation of the device, with the cations adsorbed on the adsorption electrode 11 in shipping by execution of a following second mode upon initial start-up or with the cations adsorbed on the adsorption electrode 11 by addition of auxiliaries into the adsorption electrode 11 upon the initial start-up, for instance.

By control over the direct-current power source 20 and the switching circuit 30 by the control device 40, subsequently, connection of anode of the direct-current power source 20 to the adsorption electrode 11 and connection of cathode of the direct-current power source 20 to the counter electrode 12 are made in the first mode (first step), so that hardness is increased by release of the cations into the aqueous solution from the adsorption electrode 11, and so that pH of the aqueous solution is increased by electrolysis of the aqueous solution.

That is, the cations (such as $Ca^{2+}$ and $Mg^{2+}$) are released from the adsorption electrode 11 serving as the anode into the aqueous solution in the container 10, while surface of the counter electrode 12 serving as the cathode undergoes a reaction expressed by a reaction formula:

$$2H_2O + 2e^- \rightarrow H_{2\uparrow} + 2OH^-$$

resulting in production of hydrogen gas ($H_2$) and hydroxide ions ($OH^-$).

Then the cations (such as $Ca^{2+}$ and $Mg^{2+}$) are released from the adsorption electrode 11 as the anode into the aqueous solution in the container 10, and thus alkaline hard water as an example of the functional water is produced. Provided that the aqueous solution injected into the container 10 has a hardness, the alkaline water having a hardness increased from the hardness before treatment is produced in the container 10.

On condition that the direct-current power source 20 is a constant current source, the control device 40 determines voltage application time on basis of change in the voltage applied between the adsorption electrode 11 and the counter electrode 12 and time that has elapsed since application of the voltage was started, controls the switching circuit 30, after the voltage application time has elapsed, so as to shut off the voltage applied from the direct-current power source 20 between the adsorption electrode 11 and the counter electrode 12, and thereby stops production of the alkaline hard water.

The voltage application time is determined by experiments, simulations and/or the like in accordance with volume of the aqueous solution stored in the container 10, the voltage and current that are applied, and/or the like.

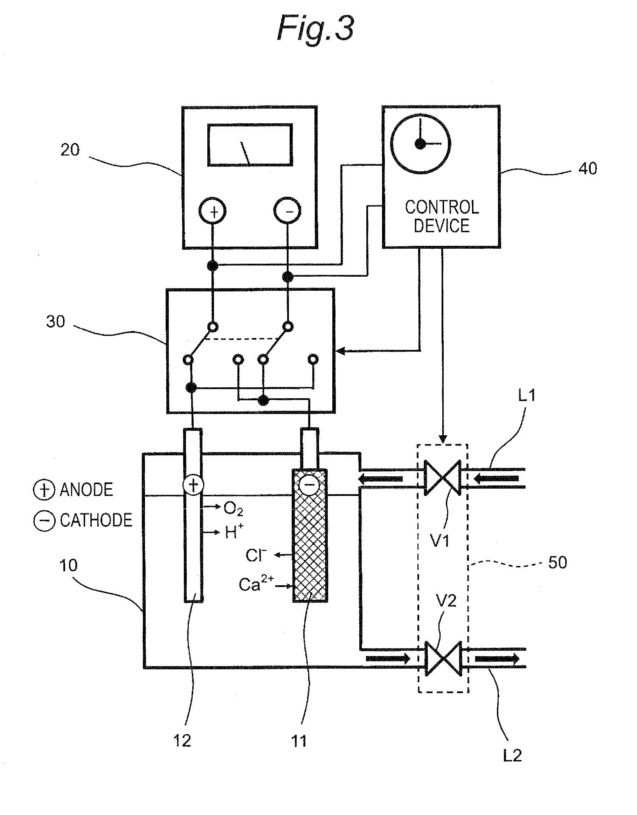

By controlling the water exchanging unit 50, as shown in Fig. 3, the control device 40 subsequently opens the on-off valve V2 and thereby supplies the functional water in the container 10 to outside. After that, the control device 40 controls the water exchanging unit 50 again to open the on-off valve V1, to close the on-off valve V2, and to supply the aqueous solution into the container 10.

By control over the direct-current power source 20 and the switching circuit 30 by the control device 40, subsequently, connection of the cathode of the direct-current power source 20 to the adsorption electrode 11 and connection of the anode of the direct-current power source 20 to the counter electrode 12 are made in the second mode (second step), so that the hardness is decreased by adsorption of the cations such as $Ca^{2+}$ and $Mg^{2+}$ (only $Ca^{2+}$ is illustrated in Fig. 2) in the aqueous solution on the adsorption electrode 11, and so that the pH of the aqueous solution is decreased by electrolysis of the aqueous solution.

That is, the cations such as $Ca^{2+}$ and $Mg^{2+}$ (only $Ca^{2+}$ is illustrated in Fig. 3) in the aqueous solution are adsorbed on the adsorption electrode 11 serving as the cathode in the container 10, while the surface of the counter electrode 12 serving as the anode undergoes a reaction expressed by a reaction formula:

$$2H_2O \rightarrow O_2\uparrow + 4H^+ + 4e^-$$

resulting in production of oxygen gas ($O_2$) and hydrogen ions ($H^+$).

Then the cations (such as $Ca^{2+}$ and $Mg^{2+}$) in the aqueous solution in the container 10 are adsorbed on the adsorption electrode 11 as the cathode, and thus acid soft water as an example of the functional water is produced. Provided that the aqueous solution injected into the container 10 has a hardness, the acid water, as the example of the functional water, having a hardness decreased from the hardness before the treatment is produced in the container 10.

Anions (such as $Cl^-$) are adsorbed on the adsorption electrode 11 as the anode in Fig. 2 and, when the acid soft water is subsequently produced in the first mode, the anions (such as $Cl^-$) are released from the adsorption electrode 11 serving as the cathode as shown in Fig. 3.

The adsorption by the adsorption electrode 11 of ions in the aqueous solution is based on electric double layer theory that charged particles move pursuant to an electric field and that the positively and negatively charged particles are paired and arranged in layers on an interface.

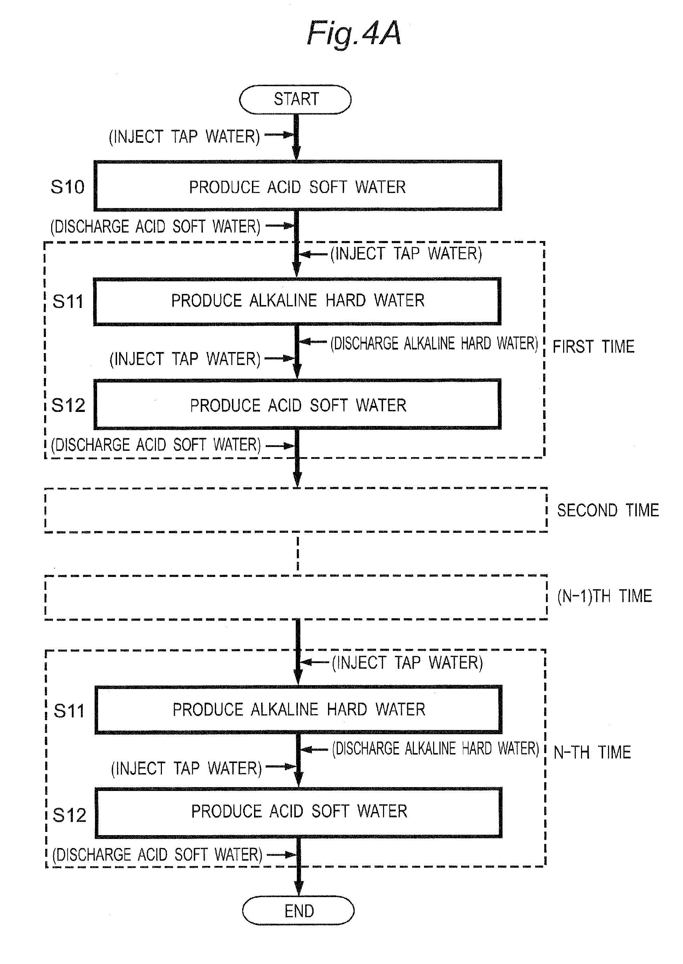

A washing method using the functional water producing device having above configuration will be described in accordance with a flow chart of Fig. 4A.

Upon start of treatment in the washing method, tap water as the aqueous solution is injected into the container 10 of the functional water producing device and acid soft water is produced in the second mode, in a step S10 shown in Fig. 4A, thereafter the acid soft water is discharged from the container 10. The step S10 is a preliminary stage for subsequent production of alkaline hard water.

With advance to a step S11, tap water as the aqueous solution is injected into the container 10 of the functional water producing device, the alkaline hard water is produced in the first mode, and the alkaline hard water is thereafter discharged from the container 10, and the discharged alkaline hard water is used for washing.

With subsequent advance to a step S12, tap water as the aqueous solution is injected into the container 10 of the functional water producing device, acid soft water is produced in the second mode, and the acid soft water is thereafter discharged from the container 10, and the discharged acid soft water is used for washing.

After the steps S11 and S12 at first time, the alkaline hard water and the acid soft water can be produced alternately, continuously, and efficiently by repetition of similar steps at a plurality of times (N times in Fig. 4A).

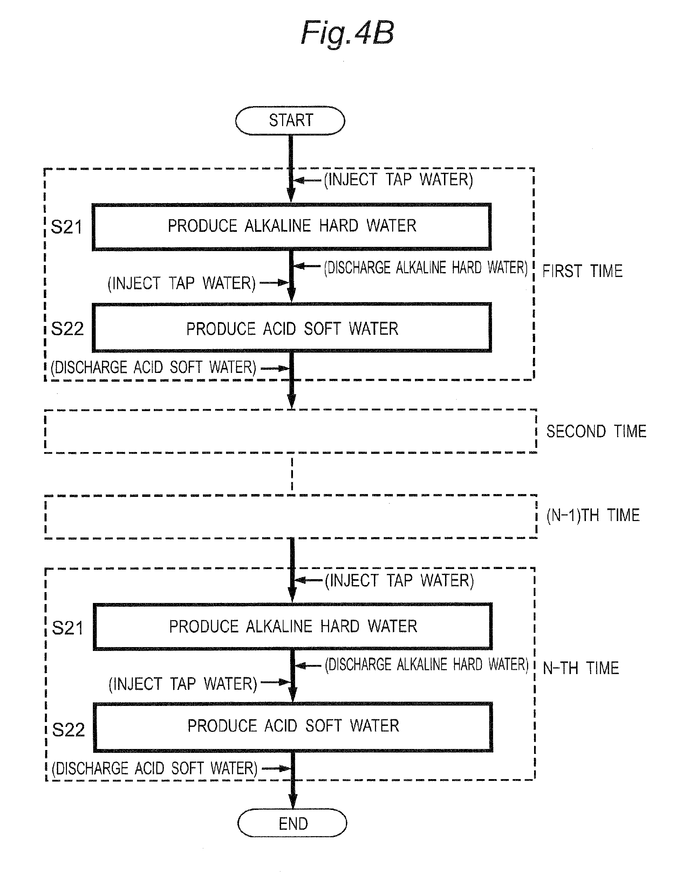

Another washing method using the functional water producing device will be described in accordance with a flow chart shown in Fig. 4B.

Upon start of treatment in the washing method, tap water as the aqueous solution is injected into the container 10 of the functional water producing device and alkaline hard water is produced in the first mode, in a step S21 shown in Fig. 4B, and the alkaline hard water is thereafter discharged from the container 10.

With subsequent advance to a step S22, tap water as the aqueous solution is injected into the container 10 of the functional water producing device, acid soft water is produced in the second mode, and the acid soft water is thereafter discharged from the container 10, and the discharged acid soft water is used for washing.

The alkaline hard water in the step S21 at first time is not used for washing but is used for a purpose of having the cations adsorbed by the adsorption electrode 11 in the production of the acid soft water in the step S22.

After the steps S21 and S22 at first time, the acid soft water and the alkaline hard water can be produced alternately, continuously, and efficiently by repetition of similar steps at a plurality of times (N times in Fig. 4B).

As shown in Figs. 4A and 4B, the alkaline hard water and the acid soft water can alternately be produced from tap water without use of special water.

Although an ion concentration regulator device that produces the acid soft water and the alkaline hard water has been described with reference to Figs. 2 and 3, alkaline soft water can be produced by application of a voltage of reverse polarity that causes no electrolysis between the adsorption electrode 11 and the counter electrode 12 for the alkaline hard water produced in relation to Fig. 2 and by adsorption of the cations by the adsorption electrode 11 having become the cathode.

Acid hard water can be produced by application of a voltage of the reverse polarity that causes no electrolysis between the adsorption electrode 11 and the counter electrode 12 for the acid soft water produced in relation to Fig. 3 and by release of the cations from the adsorption electrode 11 having become the anode.

In accordance with the functional water producing device having the above configuration and the washing method, by the control over the direct-current power source 20 and the switching circuit 30 by the control device 40, the cations are released into the aqueous solution from the adsorption electrode 11 in the first mode with the adsorption electrode 11 set as the anode and with the counter electrode 12 set as the cathode, and the hard water is produced as first functional water. Then the pH is increased in the first mode by application between the adsorption electrode 11 and the counter electrode 12 of a voltage that causes electrolysis of water only on the counter electrode 12 and thus the pH can be controlled.

In the functional water producing device and the washing method, therefore, the functional water having undergone hardness control, pH control, and/or the like can be produced with use of the simple configuration. In addition, the soft water and the hard water or the acid water and the alkaline water can be produced in a short period of time.

In the invention, the functional water refers to water having acquired useful functions through an electrochemical reaction that is caused by passage of a current through aqueous solution containing electrolytes.

By the control over the direct-current power source 20 and the switching circuit 30 by the control device 40, the cations in the aqueous solution are adsorbed on the adsorption electrode 11 in the second mode with the adsorption electrode 11 set as the cathode and with the counter electrode 12 set as the anode, and the adsorption electrode 11 is thereby regenerated for subsequent production of the hard water. Then the voltage that causes the electrolysis of water only on side of the counter electrode 12 is applied between the adsorption electrode 11 and the counter electrode 12, and thus the pH is decreased in the second mode by production of oxygen gas and hydrogen ions through the electrolysis of water on the surface of the counter electrode 12 serving as the cathode, so that the pH can be controlled.

The soft water, the hard water, the acid water, and the alkaline water can efficiently be produced by alternate execution of the first mode and the second mode through the control over the direct-current power source 20 and the switching circuit 30 by the control device 40.

By execution of the first mode and subsequent execution of the second mode in one washing operation, the first functional water (hard water or alkaline hard water) and the second functional water (soft water or acid soft water) are produced in order of mention in a sequence of the one washing operation, and thus washing, bacteria elimination, and sterilization can effectively be carried out by initial elimination of protein stains on objects to be washed, for instance, by the first functional water (hard water or alkaline hard water) and by the subsequent bacteria elimination and sterilization by the second functional water (soft water or acid soft water). After the cations are released from the adsorption electrode 11 in the first mode, the second mode in which the cations are adsorbed can efficiently be carried out.

The cations can be made to remain adsorbed on the adsorption electrode 11 by completion of one washing operation with final execution of the second mode in the sequence of the operation, and thus the cations can efficiently be released in an operation of the first mode in the subsequent washing operation.

The first functional water (hard water or alkaline hard water) produced in the first mode is temporarily stored in a tank 70 (shown in Fig. 1), thus the first functional water (hard water or alkaline hard water) stored in the tank 70 can be used on condition that volume of the first functional water (hard water or alkaline hard water) produced in the subsequent first mode does not satisfy a volume required for washing, and washing capacity can be improved. The second functional water (soft water or acid soft water) produced in the second mode may temporarily be stored in the tank 70. In this technique, the second functional water (soft water or acid soft water) stored in the tank 70 can be used on condition that volume of the second functional water (soft water or acid soft water) produced in the subsequent second mode does not satisfy a volume required for bacteria elimination and sterilization, and thus capacity for the bacteria elimination and the sterilization can be improved.

By the control device 40, the alkaline hard water can be produced by the increase in the hardness that is caused by the release of the cations into the aqueous solution from the adsorption electrode 11 in the first mode with the adsorption electrode 11 set as the anode and with the counter electrode 12 set as the cathode and by the increase in the pH of the aqueous solution that is caused by the electrolysis of the aqueous solution. By the control device 40, on the other hand, the acid soft water can be produced by the decrease in the hardness that is caused by the adsorption of the cations in the aqueous solution onto the adsorption electrode 11 in the second mode with the adsorption electrode 11 set as the cathode and with the counter electrode 12 set as the anode and by the decrease in the pH of the aqueous solution that is caused by the electrolysis of the aqueous solution.

By provision of an adding unit 60 (shown in Fig. 1) as an example of adding means in the functional water producing device, hardness components for further increasing the hardness of the first functional water can be added as auxiliaries to the first functional water before the first functional water is produced (or after the first functional water is produced) in the first mode, so that hard water or alkaline hard water that has high hardness is obtained. In a region where tap water has low hardness, for instance, produced hard water or alkaline hard water cannot be provided with so high hardness, and the hardness can be increased by addition of the hardness components as the auxiliaries.

(Second Embodiment)

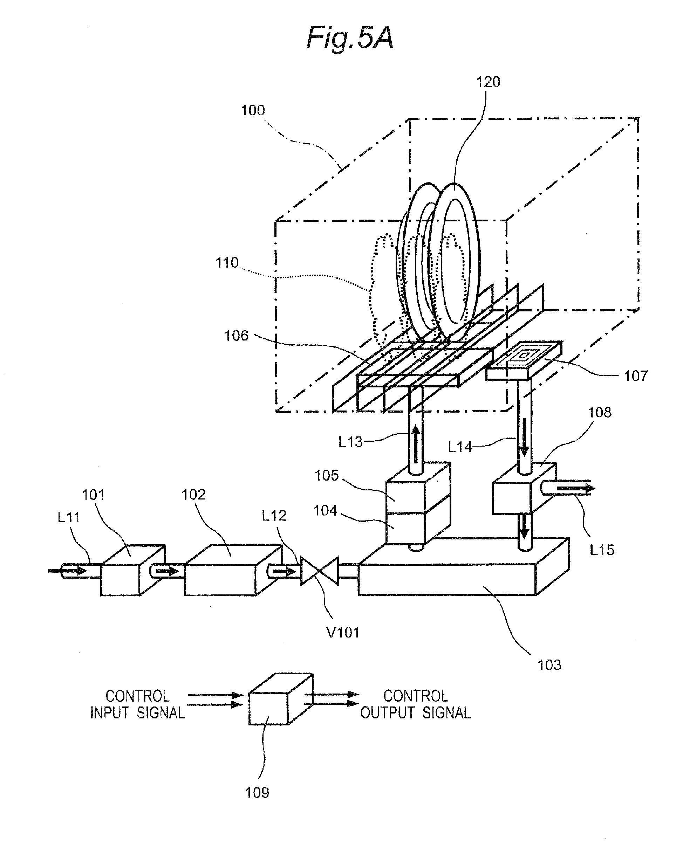

Fig. 5A shows a configuration of a dishwasher as an example of a washing device according to a second embodiment of the invention. In the second embodiment, a functional water producing device is used that has a configuration similar to the configuration of the functional water producing device according to the first embodiment.

As shown in Fig. 5A, the dishwasher according to the second embodiment includes a water supply pipe L11 for supplying washing water (tap water) from outside, a water supply unit 101 as an example of water supply means provided on the water supply pipe L11, a functional water producing device 102 to which one end of the water supply pipe L11 is connected and which produces functional water by using the washing water (tap water) supplied from the water supply unit 101, a water supply pipe L12 of which one end is connected to the functional water generator 102, an on-off valve V101 provided in the water supply pipe L12, a water storage tank 103 connected to the other end of the water supply pipe L12, a going pipe L13 of which one end is connected to the water storage tank 103 and of which the other end is connected to bottom part of a washing tank 100, a return pipe L14 of which one end is connected to the water storage tank 103 and of which the other end is connected to the bottom part of the washing tank 100, a temperature control unit 104 as an example of heating means provided on the going pipe L23, a washing water circulation pump 105 as an example of circulation means provided downstream of the temperature control unit 104 on the going pipe L13, a spray mechanism 106 as an example of spray means which is provided on bottom surface side in the washing tank 100 and to which the other end of the going pipe L13 is connected, a washing water collection unit 107 as an example of washing water collection means which is provided on the bottom surface in the washing tank 100 and to which the other end of the return pipe L14 is connected, a drain unit 108 as an example of drain means provided on the return pipe L14, a drain pipe L15 of which one end is connected to the drain unit 108, and a control device 109.

The control device 109, made of microcomputers, input-output circuits, and the like, receives control input signals from an operation panel (not shown) or the like and outputs control output signals to the water supply unit 101, the functional water producing device 102, the temperature control unit 104, the washing water circulation pump 105, the spray mechanism 106, the washing water collection unit 107, and the drain unit 108.

In the dishwasher having above configuration, as shown in Fig: 5A, tableware 120 or the like that is to be washed is initially arranged in the washing tank 100.

<Washing Step Using Tap Water>

Then the on-off valve V101 is opened and thus washing water (tap water) from the outside is supplied by the water supply unit 101 through the water supply pipe L11, the functional water producing device 102, the water supply pipe L12, and the on-off valve V101 to the water storage tank 103.

Subsequently, the on-off valve V101 is closed, the washing water circulation pump 105 is activated, and the washing water 110 (tap water) in the water storage tank 103 is warmed by the temperature control unit 104 and is sprayed from the spray mechanism 106 onto the tableware 120 that is to be washed in the washing tank 100. Then the washing water (tap water) may be warmed by the temperature control unit 104 to a temperature suitable for washing or may be supplied to the spray mechanism 106 without modification when the water has a high temperature.

In this process, cleaning agents put in the washing tank 100 of the dishwasher are added to the washing water 110 (tap water) so as to increase washing effect.

Subsequently, the washing water that is accumulated on bottom of the washing tank 100 and that includes the cleaning agents is drained by the drain unit 108 through the return pipe L14 and the drain pipe L15 to the outside.

In this washing step using the tap water, the washing water in the washing tank 100 may be collected by the washing water collection unit 107 and may be circulated by the washing water circulation pump 105 through the water storage tank 103, the temperature control unit 104, the spray mechanism 106, and the washing water collection unit 107.

<Washing Step Using Alkaline Hard Water>

Subsequently, washing water (tap water) from the outside is supplied by the water supply unit 101 through the water supply pipe L11 to the functional water producing device 102.

Subsequently, alkaline hard water is produced in the first mode in the functional water producing device 102 from the washing water (tap water) in the container 10 (shown in Fig. 1) and is thereafter supplied from the functional water producing device 102 into the water storage tank 103 by opening of the on-off valve V101. After that, the on-off valve V101 is closed, the washing water circulation pump 105 is driven, and the washing water (alkaline hard water) in the water storage tank 103 is warmed by the temperature control unit 104 and is supplied through the going pipe L13 to the spray mechanism 106. The functional water produced in the first mode in the functional water producing device 102 depends on hardness of the tap water that has not yet undergone the treatment and is thus alkaline water that has higher hardness than before the treatment.

The washing water (alkaline hard water) supplied to the spray mechanism 106 is sprayed onto the tableware 120 that is to be washed in the washing tank 100, and washing is thereby carried out. Then the washing water in the washing tank 100 is collected by the washing water collection unit 107 and the washing water is circulated by the washing water circulation pump 105 through the water storage tank 103, the temperature control unit 104, the spray mechanism 106, and the washing water collection unit 107.

The washing is carried out for a specified period by spraying of the washing water (alkaline hard water), and the washing water accumulated on the bottom in the washing tank 100 is thereafter drained by the drain unit 108 through the return pipe L14 and the drain pipe L15 to the outside.

The alkaline hard water is suitable for decomposition of protein and is therefore useful in eliminating protein stains on the tableware 120.

<Washing Step Using Acid Soft Water>

Then washing water (tap water) from the outside is supplied by the water supply unit 101 through the water supply pipe L11 to the functional water producing device 102.

Subsequently, the acid soft water is produced in the second mode in the functional water producing device 102 from the washing water (tap water) in the container 10 and is thereafter supplied from the functional water producing device 102 into the water storage tank 103 by opening of the on-off valve V101. After that, the on-off valve V101 is closed, the washing water circulation pump 105 is activated, and the washing water (acid soft water) in the water storage tank 103 is warmed by the temperature control unit 104 and is supplied through the going pipe L13 to the spray mechanism 106. Then the washing water (tap water) may be warmed by the temperature control unit 104 to a temperature suitable for washing or may be supplied to the spray mechanism 106 without modification when the water has a high temperature. The functional water produced in the second mode in the functional water producing device 102 depends on the hardness of the tap water that has not yet undergone the treatment and is thus acid water that has lower hardness than before the treatment.

The washing water (acid soft water) supplied to the spray mechanism 106 is sprayed onto the tableware 120 that is to be washed in the washing tank 100, and washing is thereby carried out. Then the washing water in the washing tank 100 is collected by the washing water collection unit 107 and the washing water is circulated by the washing water circulation pump 105 through the water storage tank 103, the temperature control unit 104, the spray mechanism 106, and the washing water collection unit 107.

The washing is subsequently carried out for a specified period by use of the washing water (acid soft water), and the washing water accumulated on the bottom in the washing tank 100 is thereafter drained by the drain unit 108 through the return pipe L14 and the drain pipe L15 to the outside.

The acid soft water is suitable for bacteria elimination and sterilization, is capable of eliminating water spots on glasses, scale components, and the like, and produces a high rinse effect.

<Drying Step>

Subsequently, the tableware 120 that is to be washed in the washing tank 100 is dried by a dryer device (such as hot-air device and heater) not shown.

In accordance with the dishwasher having above configuration, the dishwasher having a high washing effect can be provided.

Washing effect of the first functional water (hard water or alkaline hard water) can be improved by heating with the temperature control unit 104 of the functional water produced by the functional water producing device 102.

The washing water in the washing tank 100 is collected by the washing water collection unit 107, the washing water is circulated by the washing water circulation pump 105 through the water storage tank 103, the temperature control unit 104, the spray mechanism 106, and the washing water collection unit 107, thus the first functional water (acid soft water) or the second functional water (alkaline hard water) can be reused as the washing water in the functional water producing device 102, and the washing effect can sustainably be obtained.

Without the circulation of the washing water, the washing may be carried out while the functional water produced by the functional water producing device 102 is continuously supplied into the washing tank 100.

The functional water can reliably be hit on objects to be washed in the washing tank 100 and the washing effect can be increased by use as functional water supply means of the spray mechanism 106 for spraying the functional water, as the washing water, produced by the functional water producing device 102 onto the objects to be washed in the washing tank 100.

The acid soft water in the second mode is used following the alkaline hard water produced in the first mode of the functional water producing device 102 in the dishwasher of the second embodiment, and the production of the acid soft water in the second mode is inevitably carried out as the preliminary stage for the production of the alkaline hard water in the first mode in the functional water producing device 102 so that the cations such as $Ca^{2+}$ and $Mg^{2+}$ are adsorbed on the adsorption electrode 11 (shown in Fig. 1).

For instance, preparation for the production of the alkaline hard water in the first mode may be carried out by the production of the acid soft water in the second mode upon start of a washing operation and by the adsorption of the cations such as $Ca^{2+}$ and $Mg^{2+}$ on the adsorption electrode 11 and the produced acid soft water may be discarded or, on condition that the last washing operation has been completed with production of the acid soft water in the second mode, the alkaline hard water may be produced in the first mode upon start of the next washing operation.

Though the alkaline hard water and the acid soft water as the washing water are sequentially sprayed onto the tableware 120 that is to be washed in the dishwasher of the second embodiment, the acid soft water may earlier be produced in the second mode of the functional water producing device 102 and may temporarily be stored in a separately prepared tank (not shown) so that the alkaline hard water produced in the subsequent first mode may earlier be used for washing before the acid soft water stored in the tank is used. Thus the washing, the bacteria elimination, the sterilization, and the rinsing can effectively be carried out by the elimination of stains by the alkaline hard water and by the subsequent bacteria elimination and sterilization by the acid soft water.

In the dishwasher of the second embodiment, the spraying of the alkaline hard water and the acid soft water onto the tableware that is to be washed may alternately be repeated a plurality of times instead of being carried out one time.

The spray mechanism of the dishwasher may have a structure in which the washing water is sprayed from rotary nozzles instead of being simply sprayed.

Heat sterilization in a conventional dishwasher is carried out with inside of a washing tank having a high temperature in a drying operation, whereas the dishwasher of the first embodiment, which is capable of carrying out the sterilization by the acid soft water, makes it possible to carry out drying operations at a low temperature and provides a noticeable energy saving effect.

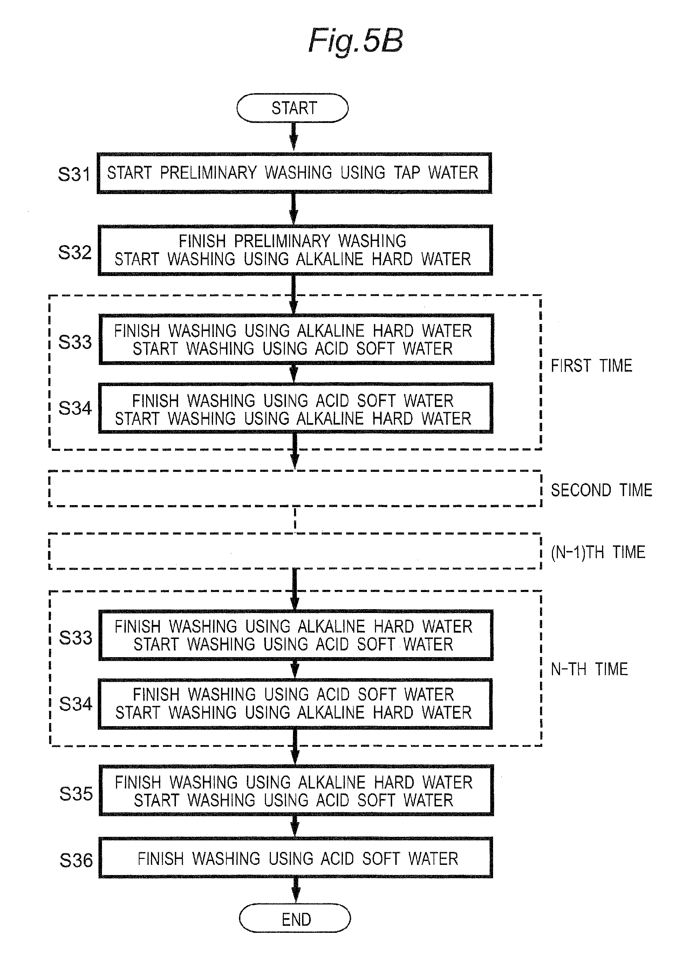

Another washing method using the functional water producing device 102 will be described in accordance with a flow chart shown in Fig. 5B.

Upon start of treatment in the washing method, the on-off valve V101 is opened and thus tap water is supplied by the water supply unit 101 through the water supply pipe L11, the functional water producing device 102, the water supply pipe L12, and the on-off valve V101 to the water storage tank 103 in a step S31 shown in Fig. 5B.

Subsequently, the on-off valve V101 is closed, the washing water circulation pump 105 is activated, the tap water (preliminary washing water) in the water storage tank 103 is warmed by the temperature control unit 104 and is sprayed from the spray mechanism 106 onto the tableware 120 that is to be washed in the washing tank 100, and preliminary washing for the tableware 120 that is to be washed in the washing tank 100 is thereby carried out (preliminary washing mode).

With advance to a step S32 upon completion of the preliminary washing for the tableware 120 by the tap water, tap water as the aqueous solution is subsequently injected into the container 10 of the functional water producing device 102, alkaline hard water is produced in the first mode, and the alkaline hard water is thereafter discharged from the container 10, and the discharged alkaline hard water is used for washing.

With subsequent advance to a step S33, the washing using the alkaline hard water is finished, tap water as the aqueous solution is injected into the container 10 of the functional water producing device 102, acid soft water is produced in the second mode, and the acid soft water is thereafter discharged from the container 10, and the discharged acid soft water is used for washing.

With subsequent advance to a step S34, the washing using the acid soft water is finished, tap water as the aqueous solution is injected into the container 10 of the functional water producing device 102, alkaline hard water is produced afresh in the first mode, and the alkaline hard water is thereafter discharged from the container 10, and the discharged alkaline hard water is used for washing.

After the steps S33 and S34 at first time, similar steps are repeated a plurality of times (N times in Fig. 5B) and thus the alkaline hard water and the acid soft water can be produced alternately, continuously, and efficiently.

With advance to a step S35 after the repetition of the similar steps at the plurality of times, the washing using the alkaline hard water is finished, tap water as the aqueous solution is injected into the container 10 of the functional water producing device 102, acid soft water is produced in the second mode, and the acid soft water is thereafter discharged from the container 10, and the discharged acid soft water is used for washing.

With advance to a step S36, the washing operation is completed with finish of the washing using the acid soft water.

Thus the sterilization by the acid soft water can be carried out for the washed tableware, and therefore a state of the washed tableware can be kept hygienic.

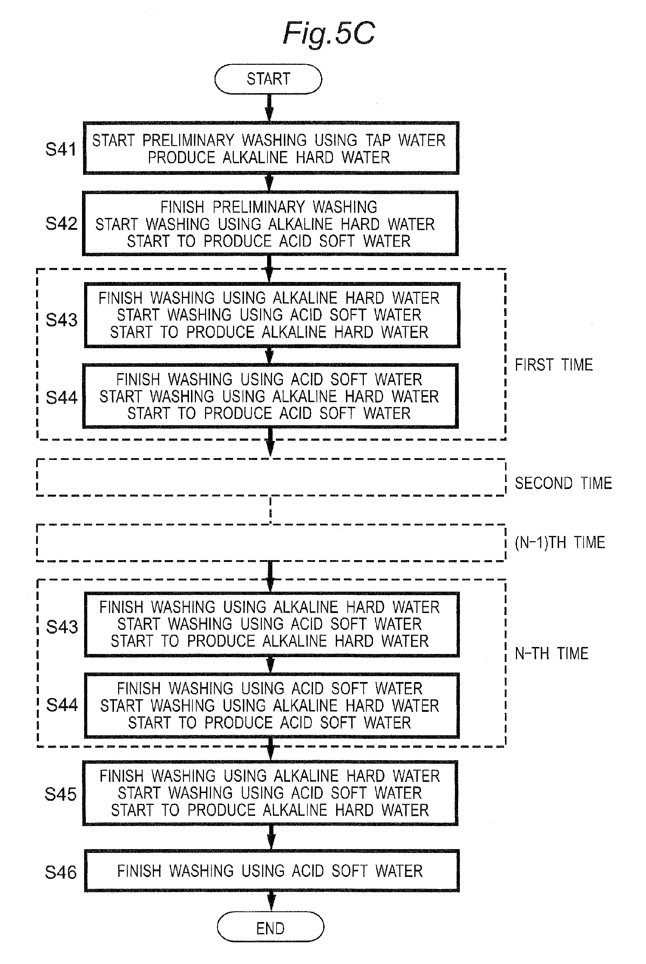

Another washing method using the functional water producing device 102 will be described in accordance with a flow chart shown in Fig. 5C.

In a step 41 upon start of treatment in the washing method, the on-off valve V101 is opened and tap water is supplied by the water supply unit 101 through the water supply pipe L11, the functional water producing device 102, the water supply pipe L12, and the on-off valve V101 to the water storage tank 103.

Subsequently, the on-off valve V101 is closed, the washing water circulation pump 105 is activated, the tap water in the water storage tank 103 is warmed by the temperature control unit 104 and is sprayed from the spray mechanism 106 onto the tableware 120 that is to be washed in the washing tank 100, and preliminary washing for the tableware 120 that is to be washed in the washing tank 100 is thereby carried out.

While the preliminary washing using the tap water is carried out, tap water is supplied by the water supply unit 101 through the water supply pipe L11 to the functional water producing device 102. In the functional water producing device 102, alkaline hard water is produced in the first mode from the tap water in the container 10.

With subsequent advance to a step 42, the preliminary washing is finished by discharge by the drain unit 108 of the tap water used for the washing in the step 41, the alkaline hard water produced in the step 41 is thereafter supplied to the water storage tank 103 with the on-off valve V101 opened, and washing using the alkaline hard water is carried out with the on-off valve V101 closed again.

While the washing using the alkaline hard water is carried out, tap water is supplied by the water supply unit 101 through the water supply pipe L11 to the functional water producing device 102. In the functional water producing device 102, acid soft water is produced in the second mode from the tap water in the container 10.

With subsequent advance to a step 43, the washing using the alkaline hard water is finished by discharge by the drain unit 108 of the alkaline hard water used for the washing in the step 42, the acid soft water produced in the step 42 is thereafter supplied to the water storage tank 103 with the on-off valve V101 opened, and washing using the acid soft water is carried out with the on-off valve V101 closed again.

While the washing using the acid soft water is carried out, tap water is supplied by the water supply unit 101 through the water supply pipe L11 to the functional water producing device 102. In the functional water producing device 102, alkaline hard water is produced in the first mode from the tap water in the container 10.

In a subsequent step 44, as is the case with the step 42, the washing using the acid soft water is finished by discharge of the water used for the washing, the alkaline hard water produced in the step 43 is thereafter supplied to the water storage tank 103, and washing using the alkaline hard water is carried out with the on-off valve V101 closed again.

After the steps S43 and S44, similar steps are repeated a plurality of times (N times in Fig. 4B) and thus the washing can be carried out with use of one of the acid soft water and the alkaline hard water while the other can efficiently be produced.

With advance to a step S45 after repetition of the similar steps at the plurality of times, the washing using the alkaline hard water is finished, the acid soft water produced in the step 44 is thereafter supplied to the water storage tank 103, and washing using the acid soft water is carried out with the on-off valve V101 closed again.

With advance to a step S46, the washing operation is completed with finish of the washing using the acid soft water.

(Third Embodiment)

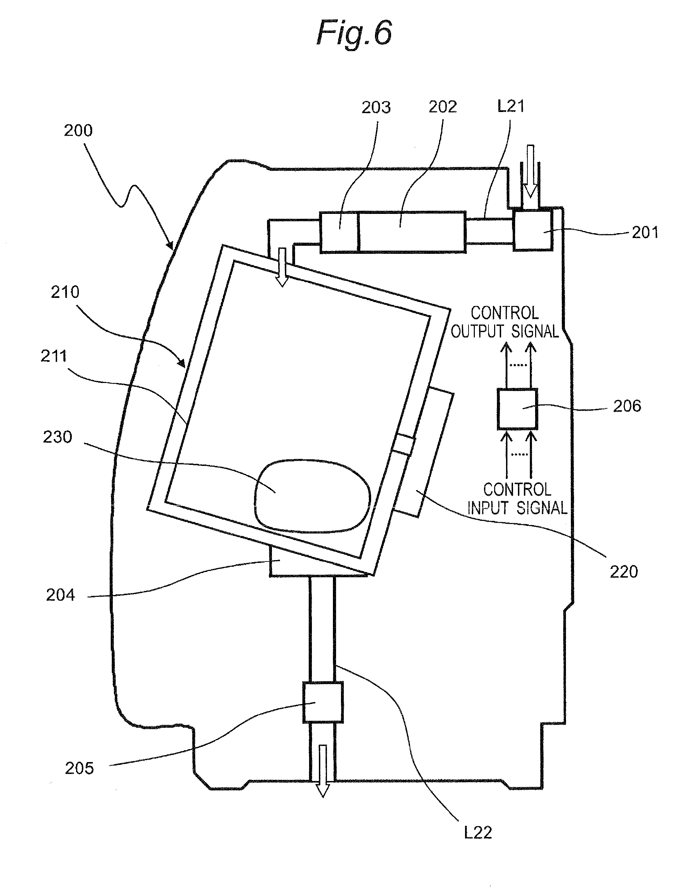

Fig. 6 shows a configuration of a drum-type washing machine as an example of a washing device according to a third embodiment of the invention. In the third embodiment, a functional water producing device is used that has a configuration similar to the configuration of the functional water producing device according to the first embodiment.

As shown in Fig. 6, the drum-type washing machine of the third embodiment includes a housing unit 210 placed in a main body 200 of the washing machine, and a driving unit 220 placed in the main body 200 of the washing machine and on a side face of the housing unit 210. A rotation drum 211 as an example of a washing tank having inclined rotation axis is housed in the housing unit 210. A water supply pipe L21 inserted from upper and rear face side (right side in Fig. 6) in the main body 200 of the washing machine is connected to upper side of the housing unit 210. A water supply unit 201 as an example of water supply means and functional water supply means, a functional water producing device 202, and a temperature control unit 203 as an example of heating means are disposed on the water supply pipe L21 in order of mention from upstream side of the water supply pipe L21. A washing water collection unit 204 is provided on lower side of the housing unit 210 and one end of a drain pipe L22 is connected to the washing water collection unit 204. A drain unit 205 as an example of drain means is provided on the drain pipe L22.

The drum-type washing machine includes a control device 206 made of microcomputers, input-output circuits, and the like. The control device 206 receives control input signals from an operation panel (not shown) or the like and outputs control output signals to the water supply unit 201, the functional water producing device 202, the temperature control unit 203, the washing water collection unit 204, the drain unit 205, and the driving unit 220.

In the drum-type washing machine having above configuration, as shown in Fig. 6, a wash 230 is initially put into the rotation drum 211.

<Laundering Step Using Alkaline Hard Water>

Subsequently, tap water from outside is supplied by the water supply unit 201 through the water supply pipe L21, the functional water producing device 202, and the temperature control unit 203 into the rotation drum 211 in the housing unit 210. Then the tap water may be warmed by the temperature control unit 203 to a temperature suitable for laundering or may be supplied into the rotation drum 211 without modification when the water has a high temperature.

In this process, cleaning agents put in the rotation drum 211 are added to the tap water so as to increase laundering effect.

Alkaline hard water is produced in the first mode from the tap water in the container 10 (shown in Fig. 1) in the functional water producing device 202, and the alkaline hard water warmed by the temperature control unit 203 is thereafter added through the water supply pipe L21 to the tap water in the rotation drum 211 of the housing unit 210. The functional water produced in the first mode in the functional water producing device 202 depends on hardness of the tap water that has not yet undergone treatment and is thus alkaline water that has higher hardness than before the treatment.

Subsequently, the rotation drum 211 is rotated by the driving unit 220 and laundering is carried out with use of the tap water to which the alkaline hard water has been added. In this laundering step, total volume of the functional water (alkaline hard water) produced by the functional water producing device 202 may be used for the laundering without addition of the alkaline hard water to the tap water. Laundering using the tap water and laundering using the functional water may separately be carried out.

The alkaline hard water is suitable for decomposition of protein and is therefore useful in eliminating protein stains on the wash 230.

Once a laundering operation is finished, the polluted water accumulated on bottom in the rotation drum 211 is discharged through the drain pipe L22 to the outside by the drain unit 205.

<Rinsing Step Using Acid Soft Water>

Subsequently, a rinsing operation is carried out with washing water (tap water) supplied from the outside through the water supply pipe L21 to the functional water producing device 202 by the water supply unit 201 and with the rotation drum 211 rotated.

Then acid soft water is produced in the second mode from the tap water in the container 10 in the functional water producing device 202, and the acid soft water warmed by the temperature control unit 203 is thereafter supplied through the water supply pipe L21 into the rotation drum 211 of the housing unit 210. The acid soft water may be warmed by the temperature control unit 203 to a temperature suitable for laundering or may be supplied into the rotation drum 211 without modification when the water has a high temperature.

The acid soft water is suitable for bacteria elimination and sterilization. The functional water produced in the second mode in the functional water producing device 202 depends on the hardness of the tap water that has not yet undergone the treatment and is thus acid water that has lower hardness than before the treatment.

After the rinsing operation using the supplied functional water (acid soft water), the water accumulated on the bottom in the rotation drum 211 is discharged by opening of the drain unit 205 through the drain pipe L22 to the outside.

<Dewatering Step>

Subsequently, dewatering is carried out by rotation of the rotation drum 211 at high speed with the drain unit 205 opened and the water wrung out of the wash is discharged through the drain unit 205 and the drain pipe L22 to the outside.

In the drum-type washing machine, the laundering step may be repeated a plurality of times with the washing water replaced and/or the rinsing step and the dewatering step may be repeated a plurality of times with the washing water replaced.

In the washing machine having the above configuration, the first functional water and the second functional water that are produced by the functional water producing device 202 are supplied as the washing water to the wash 230 to be washed in the rotation drum 211 by the water supply unit 201 doubling as the water supply means and the functional water supply means, and thus the drum-type washing machine having a high washing effect can be provided.

The functional water produced by the functional water producing device 202 is heated by the temperature control unit 203, and thus effect of the first functional water (soft water or acid soft water) on the bacteria elimination, sterilization and the like and washing effect of the second functional water (hard water or alkaline hard water) can be improved.

Though the dishwasher and the drum-type washing machine have been described as the examples of the washing device for the second and third embodiments, the washing device is not limited thereto and the invention may be applied to washing devices having other configurations.

The washing devices of the invention are good at conserving space and capable of producing a wide variety of functional water and can easily be incorporated into application products.

Though the first functional water (hard water or alkaline hard water) and the second functional water (soft water or acid soft water) that are produced by the functional water producing device 102, 202 are heated by the temperature control unit 104, 203 as the heating means in the second and third embodiments, either one of the first functional water and the second functional water may be heated by the heating means.

Though the first functional water (hard water or alkaline hard water) and the second functional water (soft water or acid soft water) are produced by the functional water producing device 102, 202 and are thereafter used for washing in the second and third embodiments, the functional water producing device of the invention may be provided in middle of a water flow path and may be configured to produce the functional water while the aqueous solution is made to flow therethrough. Thus the functional water can continuously be supplied.

Though the specific embodiments of the invention have been described, the invention is not limited to the embodiments and may be embodied with various modifications within the scope of the invention.

REFERENCE SIGNS LIST

| | |
|---|---|
| 10 | container |
| 11 | adsorption electrode |
| 12 | counter electrode |
| 20 | direct-current power source |
| 30 | switching circuit |
| 40 | control device |
| 50 | water exchanging unit |
| 60 | adding unit |
| 70 | tank |
| 100 | washing tank |
| 101 | water supply unit |
| 102 | functional water producing device |
| 103 | water storage tank |
| 104 | temperature control unit |
| 105 | washing water circulation pump |
| 106 | spray mechanism |
| 107 | washing water collection unit |
| 108 | drain unit |
| 109 | control device |
| 200 | main body of washing machine |
| 201 | water supply unit |
| 202 | functional water producing device |
| 203 | temperature control unit |
| 204 | washing water collection unit |
| 205 | drain unit |
| 206 | control device |
| 210 | housing unit |
| 211 | rotation drum |
| 220 | driving unit |
| 230 | wash |
| L1 | first pipe |
| L2 | second pipe |
| L11, L12 | water supply pipe |
| L13 | going pipe |
| L14 | return pipe |
| L15 | drain pipe |
| L21 | water supply pipe |
| L22 | drain pipe |
| V1, V2, V101 | on-off valve |

**Claims**

1. A washing device comprising:

a container (10) in which aqueous solution is contained,

an adsorption electrode (11) which is placed in the container (10) and on which adsorption and desorption of ions in the aqueous solution can be brought about,

a counter electrode (12) which is placed in the container (10) so as to face the adsorption electrode (11),

voltage application means (20) which applies a voltage between the adsorption electrode (11) and the counter electrode (12),

polarity switching means (30) which switches polarity of the voltage applied between the adsorption electrode (11) and the counter electrode (12), and

control means (40) which controls the voltage application means (20) and the polarity switching means (30), wherein

the control means (40) has a first mode in which first functional water is produced by release of cations into the aqueous solution from the adsorption electrode (11) or by adsorption of anions in the aqueous solution onto the adsorption electrode (11) with the adsorption electrode (11) set as anode and with the counter electrode (12) set as cathode through control over the voltage application means (20) and the polarity switching means (30).

2. The washing device as claimed in claim 1, wherein
the control means (40) has a second mode in which second functional water is produced by adsorption of the cations in the aqueous solution onto the adsorption electrode (11) or by release of the anions into the aqueous solution from the adsorption electrode (11) with the adsorption electrode (11) set as the cathode and with the counter electrode (12) set as the anode through control over the voltage application means (20) and the polarity switching means (30).

3. The washing device as claimed in claim 2, wherein
the control means (40) controls the voltage application means (20) and the polarity switching means (30) so as to alternately carry out the first mode and the second mode.

4. The washing device as claimed in claim 2 or 3, wherein
the control means (40) controls the voltage application means (20) and the polarity switching means (30) so as to carry out the first mode and so as to thereafter carry out the second mode in one washing operation.

5. The washing device as claimed in any one of claims 2 through 4, wherein
the control means (40) finishes one washing operation with the second mode.

6. The washing device as claimed in any one of claims 1 through 5, wherein
the adsorption electrode (11) is brought into a state in which the cations are adsorbed on the adsorption electrode (11) before the first mode is first carried out.

7. The washing device as claimed in any one of claims 1 through 6, wherein
the control means (40) carries out a preliminary washing mode in which washing is carried out using preliminary washing water, before carrying out the first mode.

8. The washing device as claimed in claim 7, wherein
the control means (40) carries out the second mode while carrying out the preliminary washing mode.

9. The washing device as claimed in any one of claims 2 through 5, wherein
the control means (40) carries out the second mode when no washing operation is carried out.

10. The washing device as claimed in any one of claims 1 through 9, further comprising:

a tank (70) for storing the first functional water produced in the first mode.

11. The washing device as claimed in any one of claims 2 through 5, wherein
the control means (40)
in the first mode, increases hardness by the release of the cations into the aqueous solution from the adsorption electrode (11) and increases pH of the aqueous solution by electrolysis of the aqueous solution with the adsorption electrode (11) set as the anode and with the counter electrode (12) set as the cathode, and
in the second mode, decreases the hardness by the adsorption of the cations in the aqueous solution onto the adsorption electrode (11) and decreases the pH of the aqueous solution by the electrolysis of the aqueous solution with the adsorption electrode (11) set as the cathode and with the counter electrode (12) set as the anode.

**12.** The washing device as claimed in any one of claims 1 through 10, further comprising:

adding means (60) by which hardness components for further increasing the hardness of the first functional water are added as auxiliaries to the first functional water before or after the first functional water is produced in the first mode.

**13.** The washing device as claimed in any one of claims 1 through 12, further comprising:

a washing tank (100, 211) for containing objects to be washed,
water supply means (101, 201) for supplying water from outside into the washing tank (100, 211),
drain means (108) for draining the water in the washing tank (100, 211), and
functional water supply means (106, 201) for supplying at least the first functional water produced in the container (10), as washing water, to the objects to be washed in the washing tank (100, 211).

**14.** The washing device as claimed in claim 13, further comprising:

heating means (104) for heating at least the first functional water produced in the container (10).

**15.** The washing device as claimed in claim 13 or 14, further comprising:

washing water collection means (107) for collecting the washing water in the washing tank (100), and
circulation means (105) for circulating the washing water through at least the functional water supply means (106) and the washing water collection means (107).

**16.** The washing device as claimed in any one of claims 13 through 15, wherein
the functional water supply means (106) is spray means for spraying at least the first functional water, produced in the container (10), as the washing water onto the objects to be washed in the washing tank (100).

**17.** The washing device as claimed in any one of claims 13 through 16, wherein
the container (10) in which the adsorption electrode (11) and the counter electrode (12) are placed is placed in a water flow path through which the aqueous solution flows, and wherein
at least the first functional water is produced in the container (10) through which the aqueous solution flows.

**18.** A washing method using a washing device including a container (10) in which aqueous solution is contained, an adsorption electrode (11) which is placed in the container (10) and on which adsorption and desorption of ions in the aqueous solution can be brought about, a counter electrode (12) which is placed in the container (10) so as to face the adsorption electrode (11), voltage application means (20) which outputs a voltage to be applied between the adsorption electrode (11) and the counter electrode (12), polarity switching means (30) which switches polarity of the voltage applied between the adsorption electrode (11) and the counter electrode (12), and control means (40) which controls the voltage application means (20) and the polarity switching means (30), the washing method comprising:

a first step in which first functional water is produced by release of cations into the aqueous solution from the adsorption electrode (11) or by adsorption of anions in the aqueous solution onto the adsorption electrode (11) with the adsorption electrode (11) set as anode and with the counter electrode (12) set as cathode, and
a second step in which second functional water is produced by adsorption of the cations in the aqueous solution by the adsorption electrode (11) or by release of the anions into the aqueous solution from the adsorption electrode (11) with the adsorption electrode (11) set as the cathode and with the counter electrode (12) set as the anode, wherein
the first step and the second step are alternately carried out by control over the voltage application means (20) and the polarity switching means (30) by the control means (40), and wherein
the control means (40) controls the voltage application means (20) and the polarity switching means (30) so as to carry out the first step and so as to thereafter carry out the second step in one washing operation.

# Fig.1

CONTROL
DEVICE

# Fig.2

# Fig.3

# Fig.4A

```
                    ┌─────────────┐
                    │    START    │
                    └─────────────┘
  (INJECT TAP WATER) ──►   │
                           ▼
      ┌──────────────────────────────────────────────┐
  S10 │            PRODUCE ACID SOFT WATER            │
      └──────────────────────────────────────────────┘
  (DISCHARGE ACID SOFT WATER) ──►  │
  ┌ ─ ─ ─ ─ ─ ─ ─ ─ ─ ─ ─ ─ ─ ─│─ ─ ─ ─ ─ ─ ─ ─ ─ ┐
  │                          ◄──(INJECT TAP WATER)   │
  │                             ▼                    │
  │   ┌──────────────────────────────────────────┐  │
  │S11│        PRODUCE ALKALINE HARD WATER        │  │
  │   └──────────────────────────────────────────┘  │  FIRST TIME
  │                 ◄──(DISCHARGE ALKALINE HARD WATER)│
  │  (INJECT TAP WATER)──►  │                        │
  │   ┌──────────────────────────────────────────┐  │
  │S12│          PRODUCE ACID SOFT WATER          │  │
  │   └──────────────────────────────────────────┘  │
  │(DISCHARGE ACID SOFT WATER)──► │                  │
  └ ─ ─ ─ ─ ─ ─ ─ ─ ─ ─ ─ ─ ─ ─ │─ ─ ─ ─ ─ ─ ─ ─ ─ ┘
                                 ▼
  ┌ ─ ─ ─ ─ ─ ─ ─ ─ ─ ─ ─ ─ ─ ─ ─ ─ ─ ─ ─ ─ ─ ─ ─ ┐
  │                                                 │  SECOND TIME
  └ ─ ─ ─ ─ ─ ─ ─ ─ ─ ─ ─ ─ ─ ─ ─ ─ ─ ─ ─ ─ ─ ─ ─ ┘
                                 ┊
  ┌ ─ ─ ─ ─ ─ ─ ─ ─ ─ ─ ─ ─ ─ ─ ─ ─ ─ ─ ─ ─ ─ ─ ─ ┐
  │                                                 │  (N-1)TH TIME
  └ ─ ─ ─ ─ ─ ─ ─ ─ ─ ─ ─ ─ ─ ─ ─ ─ ─ ─ ─ ─ ─ ─ ─ ┘
                                 ▼
  ┌ ─ ─ ─ ─ ─ ─ ─ ─ ─ ─ ─ ─ ─ ─│─ ─ ─ ─ ─ ─ ─ ─ ─ ┐
  │                          ◄──(INJECT TAP WATER)   │
  │                             ▼                    │
  │   ┌──────────────────────────────────────────┐  │
  │S11│        PRODUCE ALKALINE HARD WATER        │  │
  │   └──────────────────────────────────────────┘  │
  │                 ◄──(DISCHARGE ALKALINE HARD WATER)│  N-TH TIME
  │  (INJECT TAP WATER)──►  │                        │
  │   ┌──────────────────────────────────────────┐  │
  │S12│          PRODUCE ACID SOFT WATER          │  │
  │   └──────────────────────────────────────────┘  │
  │(DISCHARGE ACID SOFT WATER)──► │                  │
  └ ─ ─ ─ ─ ─ ─ ─ ─ ─ ─ ─ ─ ─ ─ │─ ─ ─ ─ ─ ─ ─ ─ ─ ┘
                                 ▼
                    ┌─────────────┐
                    │     END     │
                    └─────────────┘
```

# Fig.4B

```
                    ┌─────────┐
                    │  START  │
                    └─────────┘
                         │
                         ▼
┌ ─ ─ ─ ─ ─ ─ ─ ─ ─ ─ ─ ─ ◄──(INJECT TAP WATER)─ ─ ┐
│                        │                          │
│       ┌────────────────────────────────────┐     │
│  S21  │   PRODUCE ALKALINE HARD WATER       │     │
│       └────────────────────────────────────┘     │
│                         │  ◄──(DISCHARGE ALKALINE HARD WATER)   FIRST TIME
│   (INJECT TAP WATER)──► │                         │
│       ┌────────────────────────────────────┐     │
│  S22  │     PRODUCE ACID SOFT WATER          │     │
│       └────────────────────────────────────┘     │
│(DISCHARGE ACID SOFT WATER)──►│                    │
└ ─ ─ ─ ─ ─ ─ ─ ─ ─ ─ ─ ─ ─ ─ ┼ ─ ─ ─ ─ ─ ─ ─ ─ ─ ┘
                              ▼
┌ ─ ─ ─ ─ ─ ─ ─ ─ ─ ─ ─ ─ ─ ─ ─ ─ ─ ─ ─ ─ ─ ─ ─ ┐
│                                                 │   SECOND TIME
└ ─ ─ ─ ─ ─ ─ ─ ─ ─ ─ ─ ─ ─ ─ ─ ─ ─ ─ ─ ─ ─ ─ ─ ┘
                              │
┌ ─ ─ ─ ─ ─ ─ ─ ─ ─ ─ ─ ─ ─ ─ ─ ─ ─ ─ ─ ─ ─ ─ ─ ┐
│                                                 │   (N-1)TH TIME
└ ─ ─ ─ ─ ─ ─ ─ ─ ─ ─ ─ ─ ─ ─ ─ ─ ─ ─ ─ ─ ─ ─ ─ ┘
                              ▼
┌ ─ ─ ─ ─ ─ ─ ─ ─ ─ ─ ─ ◄──(INJECT TAP WATER)─ ─ ┐
│                        │                        │
│       ┌────────────────────────────────────┐   │
│  S21  │   PRODUCE ALKALINE HARD WATER       │   │
│       └────────────────────────────────────┘   │
│                         │  ◄──(DISCHARGE ALKALINE HARD WATER)  N-TH TIME
│   (INJECT TAP WATER)──► │                       │
│       ┌────────────────────────────────────┐   │
│  S22  │     PRODUCE ACID SOFT WATER          │   │
│       └────────────────────────────────────┘   │
│(DISCHARGE ACID SOFT WATER)──►│                  │
└ ─ ─ ─ ─ ─ ─ ─ ─ ─ ─ ─ ─ ─ ─ ┼ ─ ─ ─ ─ ─ ─ ─ ─ ┘
                              ▼
                    ┌─────────┐
                    │   END   │
                    └─────────┘
```

## Fig.5A

## Fig.5B

START

S31 — START PRELIMINARY WASHING USING TAP WATER

S32 — FINISH PRELIMINARY WASHING
START WASHING USING ALKALINE HARD WATER

FIRST TIME

S33 — FINISH WASHING USING ALKALINE HARD WATER
START WASHING USING ACID SOFT WATER

S34 — FINISH WASHING USING ACID SOFT WATER
START WASHING USING ALKALINE HARD WATER

SECOND TIME

(N-1)TH TIME

N-TH TIME

S33 — FINISH WASHING USING ALKALINE HARD WATER
START WASHING USING ACID SOFT WATER

S34 — FINISH WASHING USING ACID SOFT WATER
START WASHING USING ALKALINE HARD WATER

S35 — FINISH WASHING USING ALKALINE HARD WATER
START WASHING USING ACID SOFT WATER

S36 — FINISH WASHING USING ACID SOFT WATER

END

## Fig.5C

START

S41 | START PRELIMINARY WASHING USING TAP WATER
PRODUCE ALKALINE HARD WATER

S42 | FINISH PRELIMINARY WASHING
START WASHING USING ALKALINE HARD WATER
START TO PRODUCE ACID SOFT WATER

S43 | FINISH WASHING USING ALKALINE HARD WATER
START WASHING USING ACID SOFT WATER
START TO PRODUCE ALKALINE HARD WATER

S44 | FINISH WASHING USING ACID SOFT WATER
START WASHING USING ALKALINE HARD WATER
START TO PRODUCE ACID SOFT WATER

FIRST TIME

SECOND TIME

(N-1)TH TIME

S43 | FINISH WASHING USING ALKALINE HARD WATER
START WASHING USING ACID SOFT WATER
START TO PRODUCE ALKALINE HARD WATER

S44 | FINISH WASHING USING ACID SOFT WATER
START WASHING USING ALKALINE HARD WATER
START TO PRODUCE ACID SOFT WATER

N-TH TIME

S45 | FINISH WASHING USING ALKALINE HARD WATER
START WASHING USING ACID SOFT WATER
START TO PRODUCE ALKALINE HARD WATER

S46 | FINISH WASHING USING ACID SOFT WATER

END

25

# Fig.6

CONTROL
OUTPUT SIGNAL

CONTROL
INPUT SIGNAL

## INTERNATIONAL SEARCH REPORT

| International application No. |
| --- |
| PCT/JP2013/057532 |

A. CLASSIFICATION OF SUBJECT MATTER
*A47L15/42*(2006.01)i, *A47L15/46*(2006.01)i, *C02F1/46*(2006.01)i, *D06F35/00*
(2006.01)i, *D06F39/00*(2006.01)i, *D06F39/04*(2006.01)i, *D06F39/08*(2006.01)i

According to International Patent Classification (IPC) or to both national classification and IPC

B. FIELDS SEARCHED

Minimum documentation searched (classification system followed by classification symbols)
A47L15/42, A47L15/46, C02F1/46, D06F35/00, D06F39/00, D06F39/04,
D06F39/08

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2004-154491 A  (Denso Corp.), | 1-4,6,11,13, |
|   | 03 June 2004 (03.06.2004), | 14,16-18 |
| Y | paragraphs [0001], [0015] to [0068]; fig. 1 to 5 | 5,7-10,12,15 |
|   | (Family: none) | |
| Y | Yasuaki SAKANE, "Development of Dishwashing Technology with Ions of Hard Water", Sharp Technical Journal, 10 August 2003 (10.08.2003), no.86, 21 to 25 | 5 |
| Y | JP 2004-16364 A  (Sanyo Electric Co., Ltd.), 22 January 2004 (22.01.2004), paragraphs [0020], [0027], [0029]; fig. 3 (Family: none) | 7,8,15 |

|☒| Further documents are listed in the continuation of Box C. |☐| See patent family annex. |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 29 May, 2013 (29.05.13) | 11 June, 2013 (11.06.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| | International application No. |
| --- | --- |
| | PCT/JP2013/057532 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2003-79560 A  (Matsushita Electric Industrial Co., Ltd.), 18 March 2003 (18.03.2003), paragraph [0047] (Family: none) | 9 |
| Y | JP 10-57297 A  (Sharp Corp.), 03 March 1998 (03.03.1998), paragraph [0027]; fig. 1 (Family: none) | 10 |
| Y | JP 2004-81708 A  (Sharp Corp.), 18 March 2004 (18.03.2004), paragraphs [0038], [0039] (Family: none) | 12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05237478 A

- JP 2011132678 A